# EUROPEAN PATENT SPECIFICATION

(11) **EP 4 521 612 B1**
(45) Date of publication and mention of the grant of the patent: **22.04.2026**
(21) Application number: 24190496.0
(22) Date of filing: 24.07.2024
(51) Int. Cl.: H02K 9/19

(54) **HAIRPIN COIL COOLING STRUCTURE FOR HAIRPIN WINDING MOTOR**
HAARNADELSPULENKÜHLSTRUKTUR FÜR HAARNADELWICKLUNGSMOTOR
STRUCTURE DE REFROIDISSEMENT DE BOBINE EN ÉPINGLE À CHEVEUX POUR MOTEUR À ENROULEMENT EN ÉPINGLE À CHEVEUX

(30) Priority: 05.09.2023 KR 20230117930
(43) Date of publication of application: 12.03.2025
(73) Proprietor: Hyundai Mobis Co., Ltd., Gangnam-gu Seoul 06141 (KR)
(72) Inventor: YOO, Eui Sung, Gwangju-si, Gyeonggi-do 12777 (KR); PARK, Hyun Ho, Suwon-si, Gyeonggi-do 16690 (KR)
(74) Representative: Frenkel, Matthias Alexander

(56) References cited:
- FR-A1- 3 116 964
- US-A1- 2011 298 317
- US-A1- 2022 069 664

## Description

### BACKGROUND OF THE INVENTION

### Field of the Invention

The present invention relates to a cooling structure for a hairpin winding motor, and more particularly, to a hairpin coil cooling structure for a hairpin winding motor, which is capable of improving performance in cooling a hairpin coil by spraying oil to a rotor plate, which is a component of a motor, and dispersing the cooling oil by rotating the rotor plate.

### Description of the Related Art

Recently, studies have been actively conducted to improve an output of a motor that is a key component of a hybrid or electric vehicle.

In general, it is known that the output of the motor is proportional to the number of turns of a coil wound around a stator core. Therefore, a method of increasing a space factor of the coil wound around the stator core may be considered to improve the output of the motor without increasing a size of the motor.

Recently, as an example of the method, a method of winding an angular coil (flat coil) having an approximately quadrangular cross-sectional shape instead of using an annular coil having a circular cross-section has been studied.

However, it is more difficult to perform an operation of winding the angular coil than an operation of winding the annular coil. Therefore, as a way to make it easy to wind the angular coil, a motor (hereinafter, referred to as a 'hairpin winding motor') has been proposed, in which a plurality of separated hairpins is inserted and fastened into a stator coil, and then the hairpins are joined by welding to define a coil winding part.

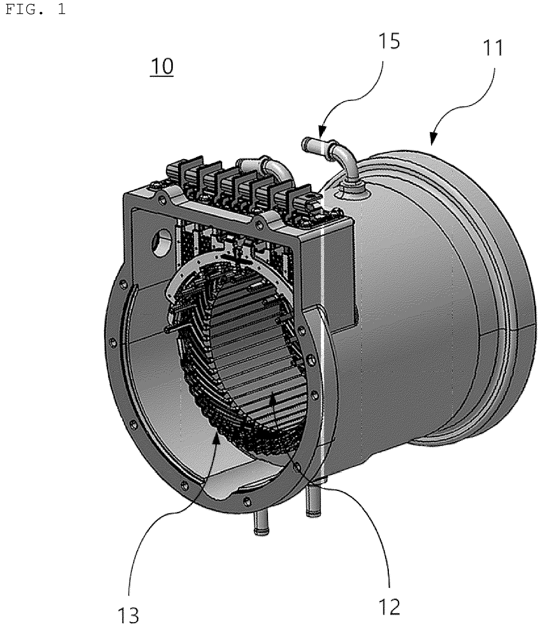

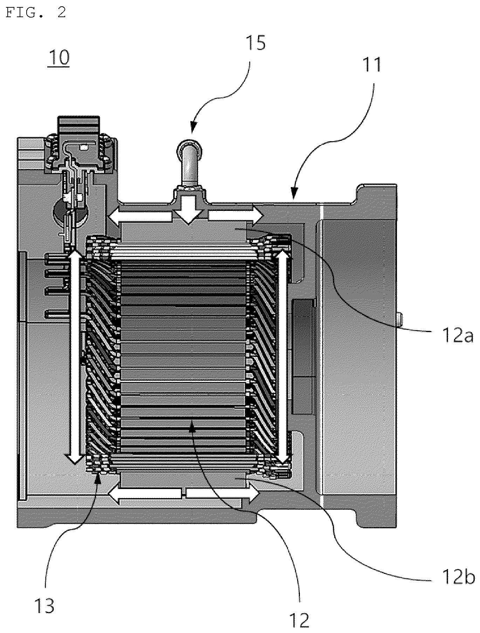

FIG. 1 illustrates a general hairpin winding motor 10, and FIG. 2 is a cross-sectional view illustrating the general hairpin winding motor 10. In the illustrated hairpin winding motor 10, a coil winding part of a stator core 12 is formed by fastening hairpin coils 13, which are formed in an approximately 'U' or 'V' shape, into slots of the stator core 12 disposed inside a housing 11 and then joining and welding the hairpin coils 13 disposed on layers of the slots. Therefore, the hairpin winding motor 10 facilitates the operation of winding the angular coil while overcoming mechanical limitations caused by a winding machine.

Meanwhile, the housing 11 further includes an oil injection tube 15 through which cooling oil is supplied into the housing 11 to cool the hairpin winding motor 10 that generates heat.

In the cooling structure for the hairpin winding motor 10 in the related art, the cooling oil introduced into the housing 11 flows, as indicated by the arrows, because of rotor plates (not illustrated) disposed at one open side 12a and the other open side 12b of the stator core 12, and the cooling oil is supplied and circulated only to a radially outer side of the hairpin coil 13, which causes a problem of deterioration in performance in cooling the coil disposed radially inward.

In particular, there is a need to develop a technology to prevent deterioration in performance caused by an increase in temperature of the hairpin coil because the cooling method is biased to the radially outer side even though a large amount of heat is generated from a radially inner side of the hairpin coil adjacent to the rotor. US 2022/069664 A1 discloses a motor comprising a motor housing, a stator which is provided in the motor housing and has a coil, a rotor installed in the stator to be rotatable about a rotary shaft, and a spray hole which is formed in the circumferential surface of the rotor by passing through the circumferential surface in a radial direction and which sprays a cooling fluid in the motor housing onto the coil according to the rotation of the rotor. FR 3 116 964 A1 discloses a flange of a rotor of a rotary electrical machine rotating about an axis of rotation X, comprising an inner face turned towards a rotor body, an outer face opposite the inner face, a radially external edge extending between the inner face and the outer face, and a central bore, the flange comprising at least one supply duct for a coolant, the supply duct having an inlet on the inner face of the flange and an outlet on the edge and/or on the outer face of the flange, the outlet being closer to the edge than the central bore of the flange, the inlet of the supply duct being closer to the axis of rotation X than the outlet, the supply duct extending along a substantially straight elongation axis Y.

### SUMMARY OF THE INVENTION

The invention is defined by the appended claims.

### BRIEF DESCRIPTION OF THE DRAWINGS

FIG. 1 is a perspective view of a general hairpin winding motor.
FIG. 2 is a cross-sectional view of the general hairpin winding motor.
FIG. 3 is a front perspective view of a hairpin winding motor according to an embodiment of the present invention.
FIG. 4 is a rear perspective view of the hairpin winding motor according to the embodiment of the present invention.
FIG. 5 is a partially enlarged perspective view of the hairpin winding motor according to the embodiment of the present invention.
FIG. 6 is a perspective view and a cross-sectional inner side view of a rotor plate according to a first embodiment of the present invention.
FIG. 7 is a partially enlarged perspective view of a hairpin winding motor according to another embodiment of the present invention.
FIG. 8 is a perspective view illustrating an oil injection tube according to another embodiment of the present invention.
FIG. 9 is a perspective view and a cross-sectional inner side view of a rotor plate according to a second embodiment of the present invention.
FIG. 10 is a partially enlarged perspective view illustrating an oil flow path of the rotor plate according to the second embodiment of the present invention.
FIG. 11 is a partially enlarged front view of a rotor plate according to a third embodiment of the present invention.
FIG. 12 is a partially enlarged perspective view of a rotor plate according to a fourth embodiment of the present invention.
FIG. 13 is a partially enlarged perspective view of a hairpin winding motor according to a fifth embodiment of the present invention.
FIG. 14 is a view illustrating performance in cooling the hairpin winding motor according to the embodiment of the present invention.

### DETAILED DESCRIPTION OF THE INVENTION

Hereinafter, the embodiments of the present invention will be described in detail with reference to the drawings.

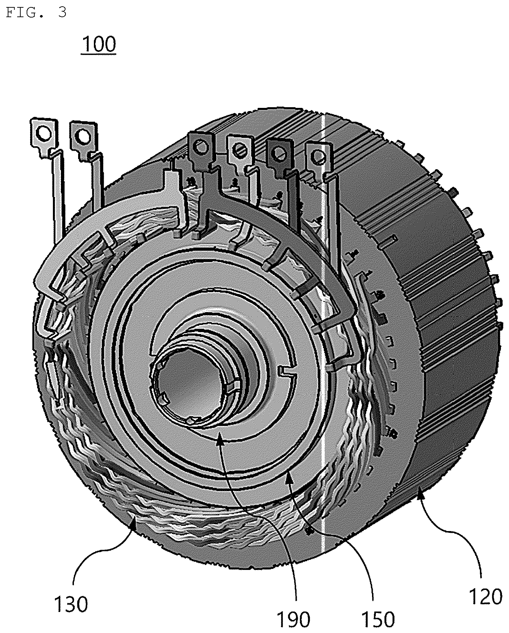

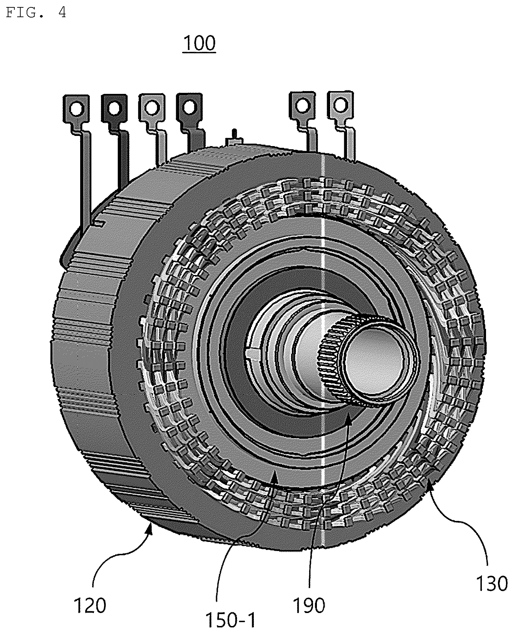

FIG. 3 is a front perspective view of a hairpin winding motor 100 according to an embodiment of the present invention, and FIG. 4 is a rear perspective view of the hairpin winding motor 100 according to the embodiment of the present invention.

In the illustrated hairpin winding motor 100, a coil winding part of a stator 120 is formed by fastening hairpin coils 130, which are formed in an approximately 'U' or 'V' shape, into slots of the stator 120 and then joining and welding the hairpin coils 130 disposed on layers of the slots.

Meanwhile, a rotor (not illustrated) is rotatably mounted inside the stator 120. A rotor shaft 190 is connected to the rotor. A rotor plate 150 is provided at one end of the rotor shaft 190 and covers one open side of the stator 120. A rotor plate 150-1 is provided at the other end of the rotor shaft 190 and covers the other open side of the stator 120.

In this case, the present invention is characterized in that a part of oil introduced into the hairpin winding motor 100 is scattered toward a radially inner side of the hairpin coil 130 by the rotor plate 150 that rotates in conjunction with the rotor shaft 190. A detailed configuration of the hairpin winding motor 100 for implementing the above-mentioned characteristics will be described in detail with reference to the drawings.

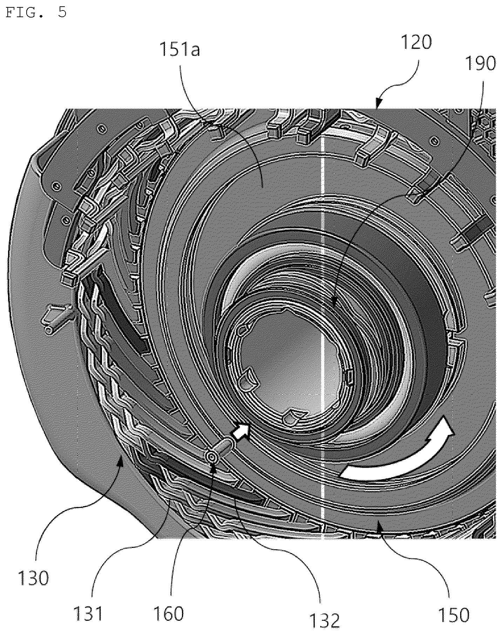

FIG. 5 is a partially enlarged perspective view of the hairpin winding motor 100 according to the embodiment of the present invention.

As illustrated in FIG. 5, the rotor plate 150 is provided at one open side of the stator 120 and coupled to the rotor shaft 190. In addition, the winding motor 100 includes an oil injection tube 160 configured to supply cooling oil into the winding motor 100. The cooling oil injection tube 160 has a nozzle formed at an end thereof to supply (spray) the cooling oil to one surface 151a of the rotor plate 150, and the nozzle is disposed to be directed toward one surface of the rotor plate 150.

In this case, the following configuration is provided to supply the oil, which is supplied to one surface 151a of the rotor plate 150, to an inner coil 132 positioned at a radially inner side among the hairpin coils 130.

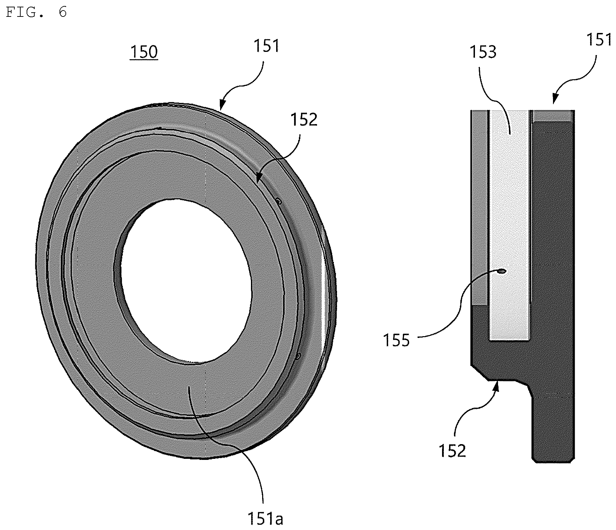

FIG. 6 is a perspective view and a cross-sectional inner side view of the rotor plate 150 according to a first embodiment of the present invention.

As illustrated, the rotor plate 150 includes a circular plate-shaped body portion 151 having a hollow portion formed at a center thereof so that the rotor shaft penetrates the circular body portion 151, and a spray portion 152 protruding from one surface of the circular body portion 151 toward one side. The spray portion 152 is formed on a radially central portion of the circular body portion 151 and formed in a circumferential direction. A spray groove 153 is formed in a radially inner surface of the spray portion 152 and recessed radially outward, and the spray groove 153 is also formed in the circumferential direction. In addition, spray holes 155 are formed in the spray groove 153 and formed through the radially inner surface and an outer surface of the spray portion 152. The spray holes 155 may be provided as a plurality of spray holes 155 disposed to be spaced apart from one another in the circumferential direction.

Meanwhile, a spray surface 151a is formed on one surface of the circular body portion 151, and the spray surface 151a may be formed at a radially inner side of the spray portion 152. Therefore, when the rotor plate 150 rotates, the cooling oil supplied to the spray surface 151a through the cooling oil injection tube 160 is distributed in the circumferential direction on the spray groove 153 of the spray portion 152 by a centrifugal force, and the cooling oil is sprayed in the circumferential direction toward a radially outer side of the spray portion 152 through the spray holes 155. Meanwhile, because the inner coils 132 positioned at the radially inner side among the hairpin coils 130 are disposed adjacent to the outer side of the rotor plate 150, the sprayed oil may be scattered toward the inner coils 132.

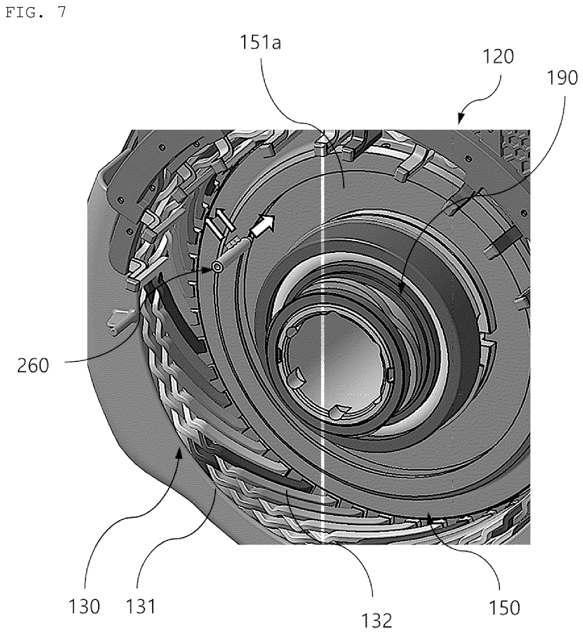

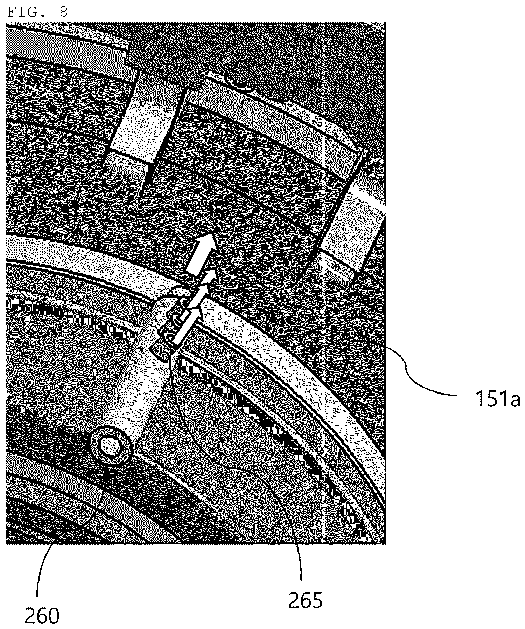

FIG. 7 is a partially enlarged perspective view of the hairpin winding motor having an oil injection tube 260 according to another embodiment of the present invention. In addition, FIG. 8 is a perspective view illustrating the cooling oil injection tube 260 according to another embodiment of the present invention.

The rotor plate 150 is provided at one open side of the stator 120 and coupled to the rotor shaft 190. In addition, the winding motor 100 includes the cooling oil injection tube 260 configured to supply cooling oil into the winding motor 100. The cooling oil injection tube 260 has a nozzle formed at an end thereof to supply (spray) the cooling oil to one surface 151a of the rotor plate 150, and the nozzle is disposed to be directed toward one surface of the rotor plate 150. In this case, the cooling oil injection tube 260 according to another embodiment of the present invention has the following configuration to spray the supplied cooling oil directly to the inner coil 132 positioned at the radially inner side among the hairpin coils 130.

Auxiliary nozzles 265 may be further provided on the cooling oil injection tube 260, and the auxiliary nozzles 265 are disposed toward the inner coil 132 positioned at the radially inner side among the hairpin coils 130. In addition, the auxiliary nozzles 265 may be provided as a plurality of auxiliary nozzles 265 disposed to be spaced apart from one another in a longitudinal direction of the cooling oil injection tube 260. Therefore, in the present embodiment, the cooling oil may be scattered toward the inner coil 132 by the rotor plate 150, and at the same time, the cooling oil may be sprayed directly to the inner coil 132 through the auxiliary nozzles 265, thereby increasing an area of the cooling oil sprayed to the inner coil 132.

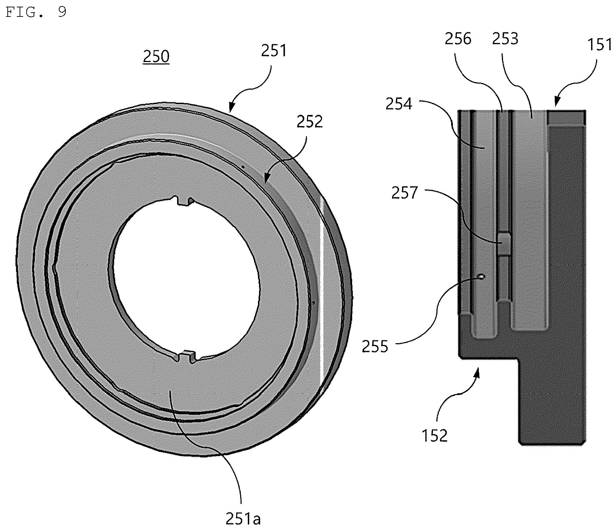

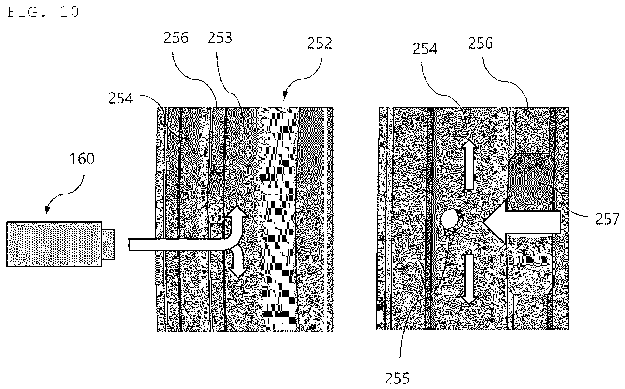

FIG. 9 is a perspective view and a cross-sectional inner side view of a rotor plate 250 according to a second embodiment of the present invention, and FIG. 10 is a partially enlarged perspective view illustrating an oil flow path of the rotor plate 250 according to the second embodiment of the present invention.

As illustrated, the rotor plate 250 includes a circular plate-shaped body portion 251 having a hollow portion formed at a center thereof so that the rotor shaft penetrates the circular body portion 251, and a spray portion 252 protruding from one surface of the circular body portion 151 toward one side. The spray portion 252 is formed on a radially central portion of the circular body portion 251 and formed in the circumferential direction. First and second spray grooves 253 and 254 are formed in a radially inner surface of the spray portion 252 and recessed radially outward, and the first and second spray grooves 253 and 254 are also formed in the circumferential direction. The first spray groove 253 is disposed adjacent to one surface 251a of the circular body portion 251, and the second spray groove 254 is disposed to be spaced apart from one surface 251a. The first spray groove 253 and the second spray groove 254 are separated by a partition wall 256. In addition, spray holes 255 are formed in the second spray groove 254 and formed through the radially inner surface and an outer surface of the spray portion 252. The spray holes 255 may be provided as a plurality of spray holes 255 disposed to be spaced apart from one another in the circumferential direction.

Meanwhile, a spray surface 251a is formed on one surface of the circular body portion 251, and the spray surface 251a may be formed at a radially inner side of the spray portion 252. Therefore, when the rotor plate 250 rotates, the cooling oil supplied to the spray surface 251a through the cooling oil injection tube 160 is distributed in the circumferential direction on the first spray groove 253 of the spray portion 152 by a centrifugal force. In this case, connection grooves 257 may be formed in the partition wall 256 so that the cooling oil may move to the second spray groove 254 when the cooling oil distributed in the first spray groove 253 reaches a predetermined level. The connection grooves 257 may be formed at predetermined distances in the circumferential direction and recessed radially inward. A position of the connection groove 257 may be adjacent to the spray hole 255. In addition, a depth of the connection groove 257 may be smaller than a depth of each of the first and second spray grooves 253 and 254. In case that the cooling oil distributed in the first spray groove 253 reaches a predetermined level, i.e., becomes higher than the connection groove 257, the cooling oil moves to the second spray groove 254 through the connection groove 257, and the cooling oil supplied to the second spray groove 254 is sprayed to the inner coil 132 through the spray hole 255. According to the rotor plate 250 of the second embodiment, in a state in which the cooling oil is distributed uniformly in the circumferential direction of the first spray groove 253, the cooling oil may be moved to the second spray groove 254 through the connection grooves 257 and sprayed through the spray holes 255, such that the cooling oil may be uniformly distributed to the plurality of spray holes 255, thereby further improving efficiency in scattering the oil.

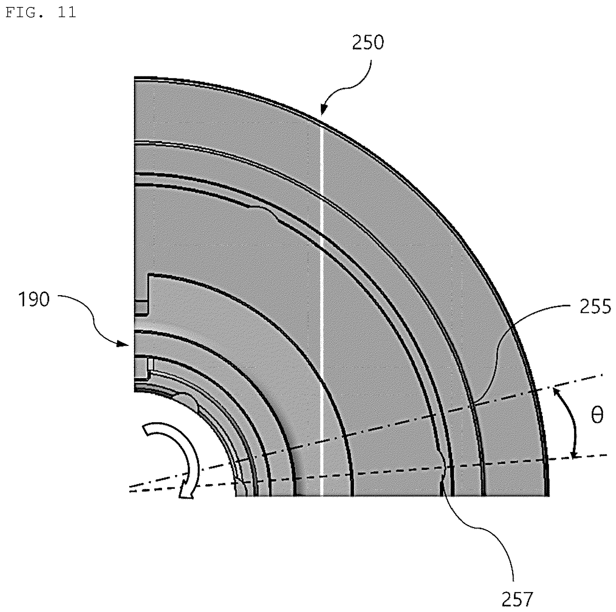

FIG. 11 is a partially enlarged front view of a rotor plate 250 according to a third embodiment of the present invention. As illustrated, the spray hole 255 may be disposed to be spaced apart from the position, at which the connection groove 257 is formed, by a first angle θ in a direction opposite to the rotation of the rotor plate 250.

This is based on the fact that the oil, which accumulates in the first spray groove 253, spirally flows by the rotation of the rotor plate 250 when the cooling oil moves to the second spray groove 254 through the connection groove 257. Therefore, the connection groove 257 and the spray hole 255 may be disposed to be spaced apart from each other by the first angle without being positioned on a straight line in the radial direction. Therefore, the oil, which has moved to the second spray groove 254 through the connection groove 257, may move to the spray hole 255 along the shortest route.

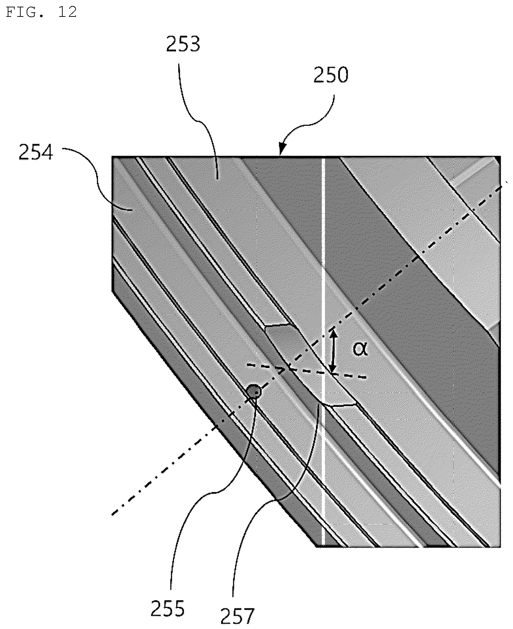

FIG. 12 is a partially enlarged perspective view of a rotor plate 250 according to a fourth embodiment of the present invention.

The connection groove 257 may be inclined at a second angle α with respect to a rotation axis of the rotor plate 250 in consideration of the rotation direction of the rotor plate 250. That is, in consideration of the situation in which the cooling oil spirally flows by the rotation of the rotor plate 250, the connection groove 257 may be formed to correspond to the spiral flow of the oil, thereby improving the flow performance of the oil.

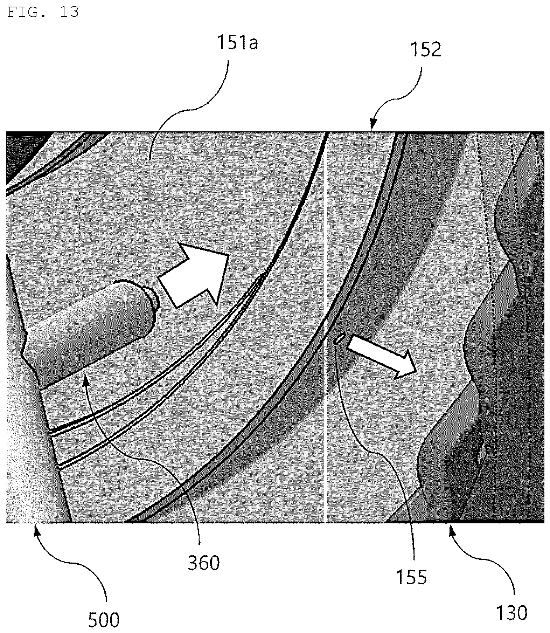

FIG. 13 is a partially enlarged perspective view of a hairpin winding motor 100 according to still another embodiment of the present invention.

An oil injection tube 360 may be connected to a lubricating oil spray tube 500 configured to supply lubricating oil for lubricating a rotor bearing, and the cooling oil injection tube 360 may be configured to spray the lubricating oil to the spray surface 151a of the rotor plate 150. In case that the cooling oil injection tube 360 is connected to a separate tube to directly spray the oil, a load of a pump may be increased by a pressure drop. Therefore, the cooling oil injection tube 360 may be connected to the lubricating oil spray tube 500 for lubricating the rotor bearing, thereby reducing a pressure drop.

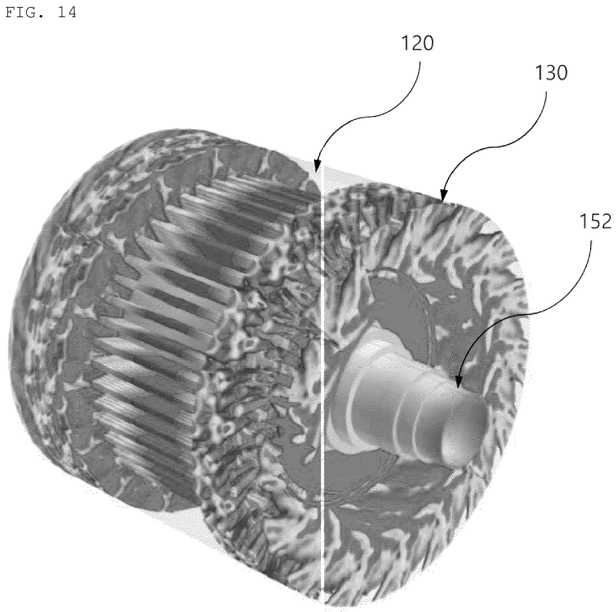

FIG. 14 is a view illustrating performance in cooling the hairpin winding motor 100 according to the embodiment of the present invention. The light color indicates a high temperature, and the deep color indicates a low temperature. As illustrated, it can be seen that in the case of the winding motor 100 of the present invention, the cooling oil is sprayed to the inner coil through the spray holes formed in the rotor plate 150, and the cooling oil is sprayed uniformly to the inner coil by the rotation of the rotor plate 150.

In addition, it can be seen that it is possible to more effectively cool the inner coil, among the hairpin coils, by means of various embodiments such as the sizes of the spray holes, the number of spray grooves, and the like.

According to the hairpin coil cooling structure for a hairpin winding motor of the present invention configured as described above, the performance in cooling the relatively weak inner coil of the hairpin core may be improved, thereby preventing the deterioration in performance of the hairpin winding motor and improving the durability.

In addition, the basic configuration of the hairpin winding motor may be maintained, such that the hairpin coil cooling structure may be applied to a motor in the related art, thereby reducing production costs or time, which may be increased by a change in production facilities, and recycling resources.

The cooling oil scattering flow rate or the cooling oil scattering shape may be easily changed only by changing the shape of the rotor plate, thereby reducing production costs or time that may be increased by a change in layouts of the motor.

### DESCRIPTION OF REFERENCE NUMERALS

100: Hairpin winding motor
120: Stator
130: Hairpin coil
131: Hairpin outer coil
132: Hairpin inner coil
150, 150-1: Rotor plate
151a: Spray surface
151: Body portion
152: Spray portion
153: Spray groove
155: Spray hole
160, 260: Oil injection tube
265: Auxiliary nozzle
190: Rotor shaft
250: Rotor plate
251: Body portion
252: Spray portion
251a: Spray surface
253: First spray groove
254: Second spray groove
255: Spray hole
256: Partition wall
257: Connection groove
500: Lubricating oil spray tube

## Claims

1. A hairpin coil cooling structure for a hairpin winding motor (100) including a stator (120) having a plurality of slots formed through the stator (120) in a circumferential direction thereof and each having a plurality of layers in a radial direction thereof, a plurality of hairpin coils (130) fastened to the slots and connected to one another to define a coil winding, a rotor rotatably mounted inside the stator (120), and a rotor shaft (190) connected to the rotor, the hairpin coil cooling structure comprising:
a pair of rotor plates (150) respectively provided at a first end portion and a second end portion of the rotor shaft (190) and configured to cover a first open side and a second open side of the stator (120);
an oil injection tube (160, 260, 360) configured to spray a cooling oil into the winding motor (100), and
a nozzle, which is provided at an end of the oil injection tube (160, 260) to spray the cooling oil to an outer surface of the rotor plate (150), is disposed to be directed toward the outer surface of the rotor plate (150),
wherein the cooling oil sprayed to the outer surface of the rotor plate (150) is scattered toward an inner coil (132), which is positioned at a radially inner side of the stator (120) among the hairpin coils (130), by a rotation of the rotor plate (150),
wherein the rotor plate (150) includes:
a circular body portion (151) having a center penetrated by the rotor shaft (190); **characterized in that** the rotor plate (150) further includes:
a spray portion (152) protruding outward from an outer surface of the circular body portion (151), formed at a radially center of the circular body portion (151), and formed in a circumferential direction thereof;
a spray groove (153) formed in a radially inner surface of the spray portion (152) and recessed radially outward; and
a spray hole (155) formed in the spray groove (153) and formed through the radially inner surface and an outer surface of the spray portion (152), and
wherein a spray surface (151a) configured to spray the cooling oil is formed on the outer surface of the circular body portion (151), and the spray surface (151a) is formed at a radially inner side of the spray portion (152).

2. A hairpin coil cooling structure for a hairpin winding motor (100) including a stator (120) having a plurality of slots formed through the stator (120) in a circumferential direction thereof and each having a plurality of layers in a radial direction thereof, a plurality of hairpin coils (130) fastened to the slots and connected to one another to define a coil winding, a rotor rotatably mounted inside the stator (120), and a rotor shaft (190) connected to the rotor, the hairpin coil cooling structure comprising:
a pair of rotor plates (250) respectively provided at a first end portion and a second end portion of the rotor shaft (190) and configured to cover a first open side and a second open side of the stator (120);
an oil injection tube (160, 260, 360) configured to spray a cooling oil into the winding motor (100), and
a nozzle, which is provided at an end of the oil injection tube (160, 260, 360) to spray the cooling oil to an outer surface of the rotor plate (250), is disposed to be directed toward the outer surface of the rotor plate (250),
wherein the cooling oil sprayed to the outer surface of the rotor plate (250) is scattered toward an inner coil (132), which is positioned at a radially inner side of the stator (120) among the hairpin coils (130), by a rotation of the rotor plate (150),
wherein the rotor plate (250) includes:
a circular body portion (251) having a center penetrated by the rotor shaft (190); **characterized in that** the rotor plate (150) further includes:
a spray portion (252) protruding outward from an outer surface of the circular body portion (251), formed at a radially center of the circular body portion (251), and formed in a circumferential direction thereof;
a first spray groove (253) formed in a radially inner surface of the spray portion (252), disposed adjacent to the outer surface of the circular body portion (251), and recessed radially outward;
a second spray groove (254) formed in the radially inner surface of the spray portion (252), disposed to be spaced apart from the outer surface of the circular body portion (251), and recessed radially outward;
a spray hole (255) formed in the second spray groove (254) and formed through the radially inner surface and an outer surface of the spray portion (252);
a partition wall (256) formed to separate the first spray groove (253) and the second spray groove (254); and
connection grooves (257) formed in the partition wall (256) so that the cooling oil distributed in the first spray groove (253) moves to the second spray groove (254), and
wherein a spray surface (251a) configured to spray the cooling oil is formed on the outer surface of the circular body portion (251), and the spray surface (251a) is formed at a radially inner side of the spray portion (252).

3. The hairpin coil cooling structure of claim 1 or 2, wherein the oil injection tube (260) further includes an auxiliary nozzle (265) formed on the oil injection tube (260) and directed toward the inner coil (132) to spray the supplied cooling oil directly to the inner coil (132).

4. The hairpin coil cooling structure of claim 2, wherein the connection grooves (257) are formed at predetermined distances in the circumferential direction and recessed radially inward, the connection grooves (257) are formed adjacent to the spray hole (255), and a depth of the connection grooves (257) is smaller than a depth of each of the first and second spray grooves (253, 254).

5. The hairpin coil cooling structure of any one of claims 2 to 4, wherein the spray hole (255) is disposed to be spaced apart from a position, at which the connection grooves (257) are formed, by a first angle (θ) in a direction opposite to the rotation of the rotor plate (250).

6. The hairpin coil cooling structure of any one of claims 2 to 5, wherein the connection grooves (257) are inclined at a second angle (α) with respect to a rotation axis of the rotor plate (250) in a rotation direction of the rotor plate (250).

7. The hairpin coil cooling structure of any one of claims 1 to 6, wherein the oil injection tube (160, 260, 360) is connected to a lubricating oil spray tube (500) configured to inject lubricating oil into the winding motor (100), and the cooling oil is the lubricating oil.

8. The hairpin coil cooling structure of any one of claims 1 to 7, wherein the spray hole (155, 255) is provided as a plurality of spray holes (155, 255) disposed to be spaced apart from one another in the circumferential direction of the spray portion (152, 252).

9. The hairpin coil cooling structure of any one of claims 3 to 8, wherein the auxiliary nozzle (265) is provided as a plurality of auxiliary nozzles (265) disposed to be spaced apart from one another in a longitudinal direction of the oil injection tube (160, 260, 360).

10. A hairpin winding motor (100) comprising:
a stator (120) having a plurality of slots formed through the stator (120) in a circumferential direction thereof and each having a plurality of layers in a radial direction thereof;
a plurality of hairpin coils (130) fastened to the slots and connected to one another to define a coil winding,
a rotor rotatably mounted inside the stator (120);
a rotor shaft (190) connected to the rotor; and
the hairpin coil cooling structure according to any one of claims 1 to 9.

## Patentansprüche

1. Haarnadelspulenkühlstruktur für einen Haarnadelwicklungsmotor (100), der einen Stator (120) mit einer Mehrzahl von Schlitzen, die durch den Stator (120) in einer Umfangsrichtung desselben ausgebildet sind und jeweils eine Mehrzahl von Schichten in einer radialen Richtung desselben aufweisen, eine Mehrzahl von Haarnadelspulen (130), die an den Schlitzen befestigt und miteinander verbunden sind, um eine Spulenwicklung zu definieren, einen Rotor, der drehbar innerhalb des Stators (120) montiert ist, und eine Rotorwelle (190), die mit dem Rotor verbunden ist, umfasst, wobei die Haarnadelspulenkühlstruktur umfasst:
ein Paar von Rotorplatten (150), die jeweils an einem ersten Endabschnitt und einem zweiten Endabschnitt der Rotorwelle (190) vorgesehen und dazu eingerichtet sind, eine erste offene Seite und eine zweite offene Seite des Stators (120) abzudecken;
ein Öleinspritzrohr (160, 260, 360), das dazu eingerichtet ist, ein Kühlöl in den Wicklungsmotor (100) zu sprühen, und
eine Düse, die an einem Ende des Öleinspritzrohrs (160, 260) vorgesehen ist, um das Kühlöl auf eine Außenfläche der Rotorplatte (150) zu sprühen, und die so angeordnet ist, dass sie auf die Außenfläche der Rotorplatte (150) gerichtet ist,
wobei das auf die Außenfläche der Rotorplatte (150) gesprühte Kühlöl durch eine Drehung der Rotorplatte (150) in Richtung einer inneren Spule (132) gestreut wird, die unter den Haarnadelspulen (130) an einer radial inneren Seite des Stators (120) positioniert ist,
wobei die Rotorplatte (150) umfasst:
einen kreisförmigen Körperabschnitt (151) mit einer Mitte, die von der Rotorwelle (190) durchsetzt wird;
**dadurch gekennzeichnet, dass** die Rotorplatte (150) ferner umfasst:
einen Sprühabschnitt (152), der von einer Außenfläche des kreisförmigen Körperabschnitts (151) nach außen vorsteht, in einer radialen Mitte des kreisförmigen Körperabschnitts (151) ausgebildet ist und in einer Umfangsrichtung desselben ausgebildet ist;
eine Sprühnut (153), die in einer radial inneren Fläche des Sprühabschnitts (152) ausgebildet und radial nach außen vertieft ist; und
ein Sprühloch (155), das in der Sprühnut (153) ausgebildet ist und durch die radial innere Fläche und eine Außenfläche des Sprühabschnitts (152) hindurch ausgebildet ist, und
wobei eine Sprühfläche (151a), die zum Sprühen des Kühlöls eingerichtet ist, an der Außenfläche des kreisförmigen Körperabschnitts (151) ausgebildet ist und die Sprühfläche (151a) an einer radial inneren Seite des Sprühabschnitts (152) ausgebildet ist.

2. Haarnadelspulenkühlstruktur für einen Haarnadelwicklungsmotor (100), der einen Stator (120) mit einer Mehrzahl von Schlitzen, die durch den Stator (120) in einer Umfangsrichtung desselben ausgebildet sind und jeweils eine Mehrzahl von Schichten in einer radialen Richtung desselben aufweisen, eine Mehrzahl von Haarnadelspulen (130), die an den Schlitzen befestigt und miteinander verbunden sind, um eine Spulenwicklung zu definieren, einen Rotor, der drehbar innerhalb des Stators (120) montiert ist, und eine Rotorwelle (190), die mit dem Rotor verbunden ist, umfasst, wobei die Haarnadelspulenkühlstruktur umfasst:
ein Paar von Rotorplatten (250), die jeweils an einem ersten Endabschnitt und einem zweiten Endabschnitt der Rotorwelle (190) vorgesehen und dazu eingerichtet sind, eine erste offene Seite und eine zweite offene Seite des Stators (120) abzudecken;
ein Öleinspritzrohr (160, 260, 360), das dazu eingerichtet ist, ein Kühlöl in den Wicklungsmotor (100) zu sprühen, und
eine Düse, die an einem Ende des Öleinspritzrohrs (160, 260, 360) vorgesehen ist, um das Kühlöl auf eine Außenfläche der Rotorplatte (250) zu sprühen, und die so angeordnet ist, dass sie auf die Außenfläche der Rotorplatte (250) gerichtet ist,
wobei das auf die Außenfläche der Rotorplatte (250) gesprühte Kühlöl durch eine Drehung der Rotorplatte (150) in Richtung einer inneren Spule (132) gestreut wird, die unter den Haarnadelspulen (130) an einer radial inneren Seite des Stators (120) positioniert ist,
wobei die Rotorplatte (250) umfasst:
einen kreisförmigen Körperabschnitt (251) mit einer Mitte, die von der Rotorwelle (190) durchsetzt wird;
**dadurch gekennzeichnet, dass** die Rotorplatte (150) ferner umfasst:
einen Sprühabschnitt (252), der von einer Außenfläche des kreisförmigen Körperabschnitts (251) nach außen vorsteht, in einer radialen Mitte des kreisförmigen Körperabschnitts (251) ausgebildet ist und in einer Umfangsrichtung desselben ausgebildet ist;
eine erste Sprühnut (253), die in einer radial inneren Fläche des Sprühabschnitts (252) ausgebildet ist, angrenzend an die Außenfläche des kreisförmigen Körperabschnitts (251) angeordnet ist und radial nach außen vertieft ist;
eine zweite Sprühnut (254), die in der radial inneren Fläche des Sprühabschnitts (252) ausgebildet ist, so angeordnet ist, dass sie von der Außenfläche des kreisförmigen Körperabschnitts (251) beabstandet ist, und radial nach außen vertieft ist;
ein Sprühloch (255), das in der zweiten Sprühnut (254) ausgebildet ist und durch die radial innere Fläche und eine Außenfläche des Sprühabschnitts (252) hindurch ausgebildet ist;
eine Trennwand (256), die so ausgebildet ist, dass sie die erste Sprühnut (253) und die zweite Sprühnut (254) trennt; und
Verbindungsnuten (257), die in der Trennwand (256) ausgebildet sind, sodass sich das in der ersten Sprühnut (253) verteilte Kühlöl zur zweiten Sprühnut (254) bewegt, und
wobei eine Sprühfläche (251a), die zum Sprühen des Kühlöls eingerichtet ist, an der Außenfläche des kreisförmigen Körperabschnitts (251) ausgebildet ist und die Sprühfläche (251a) an einer radial inneren Seite des Sprühabschnitts (252) ausgebildet ist.

3. Haarnadelspulenkühlstruktur nach Anspruch 1 oder 2, wobei das Öleinspritzrohr (260) ferner eine Hilfsdüse (265) umfasst, die an dem Öleinspritzrohr (260) ausgebildet und auf die innere Spule (132) gerichtet ist, um das zugeführte Kühlöl direkt auf die innere Spule (132) zu sprühen.

4. Haarnadelspulenkühlstruktur nach Anspruch 2, wobei die Verbindungsnuten (257) in vorbestimmten Abständen in der Umfangsrichtung ausgebildet und radial nach innen vertieft sind, die Verbindungsnuten (257) angrenzend an das Sprühloch (255) ausgebildet sind und eine Tiefe der Verbindungsnuten (257) kleiner ist als eine Tiefe jeder der ersten und zweiten Sprühnuten (253, 254).

5. Haarnadelspulenkühlstruktur nach einem der Ansprüche 2 bis 4, wobei das Sprühloch (255) so angeordnet ist, dass es von einer Position, an der die Verbindungsnuten (257) ausgebildet sind, um einen ersten Winkel (θ) in einer Richtung entgegengesetzt zur Drehung der Rotorplatte (250) beabstandet ist.

6. Haarnadelspulenkühlstruktur nach einem der Ansprüche 2 bis 5, wobei die Verbindungsnuten (257) in einem zweiten Winkel (α) in Bezug auf eine Drehachse der Rotorplatte (250) in einer Drehrichtung der Rotorplatte (250) geneigt sind.

7. Haarnadelspulenkühlstruktur nach einem der Ansprüche 1 bis 6, wobei das Öleinspritzrohr (160, 260, 360) mit einem Schmierölsprührohr (500) verbunden ist, das dazu eingerichtet ist, Schmieröl in den Wicklungsmotor (100) einzuspritzen, und das Kühlöl das Schmieröl ist.

8. Haarnadelspulenkühlstruktur nach einem der Ansprüche 1 bis 7, wobei das Sprühloch (155, 255) als eine Mehrzahl von Sprühlöchern (155, 255) vorgesehen ist, die so angeordnet sind, dass sie in der Umfangsrichtung des Sprühabschnitts (152, 252) voneinander beabstandet sind.

9. Haarnadelspulenkühlstruktur nach einem der Ansprüche 3 bis 8, wobei die Hilfsdüse (265) als eine Mehrzahl von Hilfsdüsen (265) vorgesehen ist, die so angeordnet sind, dass sie in einer Längsrichtung des Öleinspritzrohrs (160, 260, 360) voneinander beabstandet sind.

10. Haarnadelwicklungsmotor (100), umfassend:
einen Stator (120) mit einer Mehrzahl von Schlitzen, die durch den Stator (120) in einer Umfangsrichtung desselben ausgebildet sind und jeweils eine Mehrzahl von Schichten in einer radialen Richtung desselben aufweisen;
eine Mehrzahl von Haarnadelspulen (130), die an den Schlitzen befestigt und miteinander verbunden sind, um eine Spulenwicklung zu definieren;
einen Rotor, der drehbar innerhalb des Stators (120) montiert ist;
eine Rotorwelle (190), die mit dem Rotor verbunden ist; und
die Haarnadelspulenkühlstruktur nach einem der Ansprüche 1 bis 9.

## Revendications

1. Structure de refroidissement à bobines en épingle à cheveux pour un moteur à bobinage en épingle à cheveux (100) comprenant un stator (120) comportant une pluralité de fentes formées dans le stator (120) dans sa direction circonférentielle et comportant chacune une pluralité de couches dans sa direction radiale, une pluralité de bobines en épingle à cheveux (130) fixées aux fentes et reliées les unes aux autres pour former un enroulement de bobine, un rotor monté en rotation à l'intérieur du stator (120), et un arbre de rotor (190) relié au rotor, la structure de refroidissement à bobines en épingle à cheveux comprenant:
une paire de plaques de rotor (150) respectivement disposées à une première partie d'extrémité et à une deuxième partie d'extrémité de l'arbre de rotor (190) et conçues pour recouvrir un premier côté ouvert et un deuxième côté ouvert du stator (120);
un tube d'injection d'huile (160, 260, 360) conçu pour pulvériser une huile de refroidissement dans le moteur à enroulement (100), et
une buse, qui est disposée à une extrémité du tube d'injection d'huile (160, 260) pour pulvériser l'huile de refroidissement sur une surface extérieure de la plaque de rotor (150), est disposée de manière à être dirigée vers la surface extérieure de la plaque de rotor (150),
dans lequel l'huile de refroidissement pulvérisée sur la surface extérieure de la plaque de rotor (150) est dispersée vers une bobine intérieure (132), qui est positionnée sur un côté radialement intérieur du stator (120) parmi les bobines en épingle à cheveux (130), par une rotation de la plaque de rotor (150),
dans lequel la plaque de rotor (150) comprend:
une partie corps circulaire (151) dont le centre est traversé par l'arbre du rotor (190); **caractérisée en ce que** la plaque du rotor (150) comprend en outre:
une partie de pulvérisation (152) faisant saillie vers l'extérieur à partir d'une surface extérieure de la partie corps circulaire (151), formée au centre radial de la partie corps circulaire (151) et formée dans sa direction circonférentielle;
une rainure de pulvérisation (153) formée dans une surface radialement intérieure de la partie de pulvérisation (152) et en retrait radialement vers l'extérieur; et
un trou de pulvérisation (155) formé dans la rainure de pulvérisation (153) et formé dans la surface radialement intérieure et une surface extérieure de la partie de pulvérisation (152), et
dans lequel une surface de pulvérisation (151a) conçue pour pulvériser l'huile de refroidissement est formée sur la surface extérieure de la partie corps circulaire (151), et la surface de pulvérisation (151a) est formée au niveau d'un côté radialement intérieur de la partie de pulvérisation (152).

2. Structure de refroidissement à bobines en épingle à cheveux pour un moteur à bobinage en épingle à cheveux (100) comprenant un stator (120) comportant une pluralité de fentes formées dans le stator (120) dans sa direction circonférentielle et comportant chacune une pluralité de couches dans sa direction radiale, une pluralité de bobines en épingle à cheveux (130) fixées aux fentes et reliées les unes aux autres pour former un enroulement de bobine, un rotor monté en rotation à l'intérieur du stator (120), et un arbre de rotor (190) relié au rotor, la structure de refroidissement à bobines en épingle à cheveux comprenant:
une paire de plaques de rotor (250) respectivement disposées à une première partie d'extrémité et à une deuxième partie d'extrémité de l'arbre de rotor (190) et conçues pour recouvrir un premier côté ouvert et un deuxième côté ouvert du stator (120);
un tube d'injection d'huile (160, 260, 360) conçu pour pulvériser une huile de refroidissement dans le moteur à enroulement (100), et
une buse, qui est disposée à une extrémité du tube d'injection d'huile (160, 260, 360) pour pulvériser l'huile de refroidissement sur une surface extérieure de la plaque de rotor (250), est disposée de manière à être dirigée vers la surface extérieure de la plaque de rotor (250),
dans lequel l'huile de refroidissement pulvérisée sur la surface extérieure de la plaque de rotor (250) est dispersée vers une bobine intérieure (132), qui est positionnée sur un côté radialement intérieur du stator (120) parmi les bobines en épingle à cheveux (130), par une rotation de la plaque de rotor (150),
dans lequel la plaque de rotor (250) comprend:
une partie corps circulaire (251) dont le centre est traversé par l'arbre du rotor (190); **caractérisée en ce que** la plaque du rotor (150) comprend en outre:
une partie de pulvérisation (252) faisant saillie vers l'extérieur à partir d'une surface extérieure de la partie corps circulaire (251), formée au centre radial de la partie corps circulaire (251) et formée dans sa direction circonférentielle;
une première rainure de pulvérisation (253) formée dans une surface radialement intérieure de la partie de pulvérisation (252), adjacente à la surface extérieure de la partie corps circulaire (251), et en retrait radialement vers l'extérieur;
une deuxième rainure de pulvérisation (254) formée dans la surface radialement intérieure de la partie de pulvérisation (252), disposée de manière à être espacée de la surface extérieure de la partie corps circulaire (251) et en retrait radialement vers l'extérieur;
un trou de pulvérisation (255) formé dans la deuxième rainure de pulvérisation (254) et formé dans la surface radialement intérieure et une surface extérieure de la partie de pulvérisation (252);
une paroi de séparation (256) formée pour séparer la première rainure de pulvérisation (253) et la deuxième rainure de pulvérisation (254); et
des rainures de liaison (257) formées dans la paroi de séparation (256) de manière à ce que l'huile de refroidissement distribuée dans la première rainure de pulvérisation (253) se déplace vers la deuxième rainure de pulvérisation (254), et
dans lequel une surface de pulvérisation (251a) conçue pour pulvériser l'huile de refroidissement est formée sur la surface extérieure de la partie corps circulaire (251), et la surface de pulvérisation (251a) est formée au niveau d'un côté radialement intérieur de la partie de pulvérisation (252).

3. Structure de refroidissement à serpentin en épingle à cheveux selon la revendication 1 ou 2, dans laquelle le tube d'injection d'huile (260) comprend en outre une buse auxiliaire (265) formée sur le tube d'injection d'huile (260) et dirigée vers la bobine intérieure (132) afin de pulvériser directement l'huile de refroidissement sur la bobine intérieure (132).

4. Structure de refroidissement à serpentin en épingle à cheveux selon la revendication 2, dans laquelle les rainures de liaison (257) sont formées à des distances prédéterminées dans la direction circonférentielle et en retrait radialement vers l'intérieur, les rainures de liaison (257) sont formées à proximité du trou de pulvérisation (255), et la profondeur des rainures de liaison (257) est inférieure à la profondeur de chacune des première et deuxième rainures de pulvérisation (253, 254).

5. Structure de refroidissement à serpentin en épingle à cheveux selon l'une quelconque des revendications 2 à 4, dans laquelle le trou de pulvérisation (255) est disposé de manière à être espacé d'une position, à laquelle les rainures de liaison (257) sont formées, selon un premier angle (θ) dans un sens inverse à la rotation de la plaque de rotor (250).

6. Structure de refroidissement à serpentin en épingle à cheveux selon l'une quelconque des revendications 2 à 5, dans laquelle les rainures de liaison (257) sont inclinées selon un deuxième angle (α) par rapport à un axe de rotation de la plaque de rotor (250) dans un sens de rotation de la plaque de rotor (250).

7. Structure de refroidissement à serpentin en épingle à cheveux selon l'une quelconque des revendications 1 à 6, dans laquelle le tube d'injection d'huile (160, 260, 360) est relié à un tube de pulvérisation d'huile lubrifiante (500) conçu pour injecter de l'huile lubrifiante dans le moteur à enroulement (100), et l'huile de refroidissement est l'huile lubrifiante.

8. Structure de refroidissement à serpentin en épingle à cheveux selon l'une quelconque des revendications 1 à 7, dans laquelle le trou de pulvérisation (155, 255) se présente sous la forme d'une pluralité de trous de pulvérisation (155, 255) disposés de manière à être espacés les uns des autres dans la direction circonférentielle de la partie de pulvérisation (152, 252).

9. Structure de refroidissement à serpentin en épingle à cheveux selon l'une quelconque des revendications 3 à 8, dans laquelle la buse auxiliaire (265) se présente sous la forme d'une pluralité de buses auxiliaires (265) disposées de manière à être espacées les unes des autres dans une direction longitudinale du tube d'injection d'huile (160, 260, 360).

10. Moteur à bobinage en épingle à cheveux (100) comprenant:
un stator (120) comportant une pluralité de fentes formées dans le stator (120) dans sa direction circonférentielle et comportant chacune une pluralité de couches dans sa direction radiale;
une pluralité de bobines en épingle à cheveux (130) fixées aux fentes et reliées les unes aux autres pour définir un enroulement de bobine,
un rotor monté en rotation à l'intérieur du stator (120);
un arbre de rotor (190) relié au rotor; et
la structure de refroidissement à bobine en épingle à cheveux selon l'une quelconque des revendications 1 à 9.
